Europäisches Patentamt

European Patent Office

Office européen des brevets

(11) Publication number: **0 259 001**
**A1**

# EUROPEAN PATENT APPLICATION

(21) Application number: **87306701.1**

(51) Int. Cl.⁴: **C09D 11/00**

(22) Date of filing: **29.07.87**

(30) Priority: **22.08.86 US 899114**

(43) Date of publication of application:
**09.03.88 Bulletin 88/10**

(84) Designated Contracting States:
**DE FR GB IT**

(71) Applicant: **Hewlett-Packard Company**
**3000 Hanover Street**
**Palo Alto California 94304(US)**

(72) Inventor: **Wooding, Margaret Leslie**
**1625 Northwest Highland**
**Corvallis OR 97330(US)**
Inventor: **Bares, Steven J.**
**227 South 23rd Street**
**Philomath OR 97370(US)**

(74) Representative: **Colgan, Stephen James et al**
**CARPMAELS & RANSFORD 43 Bloomsbury**
**Square**
**London WC1A 2RA.(GB)**

(54) **Low temperature ink compositions for thermal ink-jet applications.**

(57) An ink composition for ink-jet printers, particularly thermal ink-jet printers, is provided. The ink composition is useful for low temperature printing conditions, ranging from at least as low as -30° to at least room temperature, and provides acceptable print quality over the temperature use range.

The ink composition of the invention comprises a vehicle and a dye, the vehicle comprising at least one component selected from the group consisting of a low molecular weight alcohol, such as methanol, present in an amount up to about 50 wt%, and a glycol, such as diethylene glycol, ranging from 0 to about 15 wt% and the balance water. The dye concentration ranges from about 3 to 5 wt%.

EP 0 259 001 A1

# LOW TEMPERATURE INK COMPOSITIONS FOR THERMAL INK-JET APPLICATIONS

## TECHNICAL FIELD

The present application relates to ink compositions for ink-jet printers, particularly thermal ink-jet printers. Specifically, the present application relates to ink compositions capable of printing in low temperature environments, down to -30°C.

## BACKGROUND ART

Ink-jet printers are finding increasing use due to their high printing speed, compactness and light weight. Indeed, these advantages permit their utilization in the field, where they can be hand-carried from point to point and employed in conjunction with a compact or portable computer.

In one potential use, it is desired by a utility company to provide meter checkers with a light weight, easily transportable computer-printer for on-the-spot computation of a utility bill, which would be presented to the customer. Such an approach would eliminate time delays in transferring the meter information back to the office, preparing a bill, and mailing it to the customer. This approach is particularly advantageous in remote, isolated areas.

In the application envisioned, the remote, isolated areas are located in cold climates, where temperatures down to -30°C are not uncommon, even during the day. The inks presently used in ink-jet printers are not capable of operating efficiently at such extreme temperatures.

For example, present commercial inks for ink-jet printers employ a vehicle comprising 50-50 diethylene glycol and water. However, inks employing such vehicles are capable of providing acceptable print quality only down to about 10°C. Below that temperature, the viscosity of the ink is too high, causing the printing operation to cease.

It is insufficient merely to re-formulate the ink by changing the diethylene glycol/water ratio. Such attempts do not yield good print quality at low temperatures.

Rather, consideration must be given to ensuring that the vehicle is capable of reducing the freezing point of the ink to below the service temperature contemplated, that the dye remains soluble at such low temperatures and that the viscosity and surface tension are such that the pen fires at the low temperatures. Yet, the ink must also be capable of adequate operation at room temperature.

Accordingly, a need remains for an ink composition capable of printing at sub-freezing temperatures, yet capable of also printing at room temperature.

## DISCLOSURE OF INVENTION

Accordingly, it is an object of the present invention to provide an ink composition for an ink-jet printer, particularly a thermal ink-jet printer, suitable for printing at temperatures down to at least -30°C.

It is another object of the present invention to provide an ink composition that is suitable for printing at sub-freezing temperatures as well as at room temperature.

It is a still further, more specific, object of the present invention to provide a black ink composition capable of printing at sub-freezing temperatures which yields a print that is bar code readable.

These and further objects of the invention will become more readily apparent upon a consideration of the following commentary.

Briefly, an ink composition suitable for printing at temperatures at least as low as about -30°C is provided. The ink composition comprises at least one component selected from the group consisting of a low molecular weight alcohol, present in an amount up to about 50 wt%, and a glycol, ranging from 0 to about 15 wt%; dye, ranging from about 3 to 5 wt%; and the balance water, the viscosity of said ink composition being maintained below about 20 cp at -30°C.

The ink composition of the invention is capable of providing acceptable print quality at ambient temperatures ranging from at least as low as -30°C to at least about 23°. Use of a black dye, such as Food Black 2, in the foregoing ink composition yields print that is bar code readable.

## BEST MODE(S) FOR CARRYING OUT THE INVENTION

Ink compositions customarily comprise a vehicle and a dye. Surfactants, typically present in an amount of about 0.01 wt%, may be added to improve the wettability of the ink on paper. Examples include Atlas G-263, available from Atlas Refinery, Inc. (Newark, NJ), and Fluororad, available from 3M Company (St. Paul, MN).

Polymers may also be added to help control bubble formation of inks in thermal ink-jet printers. The polymer, typically present in an amount ranging from about 0.001 to 1 wt%, may comprise polyvinyl pyrrolidone, GAF-quat 734, available from the GAF Corporation; Chemical Products (New York, NY), and a mixture of polyvinyl pyrrolidone and polyvinyl alcohol.

The ink compositions of the invention may include such surfactants and polymers, as well as other materials that do not adversely affect the properties of the inks. The purity of the components employed in preparing the inks is that found in normal commercial practice.

In accordance with the invention, the vehicle of the low temperature ink comprises at least one of a low molecular weight alcohol and a glycol and the balance water. The concentration of low molecular weight alcohol is limited to a maximum of about 50 wt%, since a concentration greater than this amount results in poor print quality. Preferably, the concentration of the alcohol ranges from about 30 to 50 wt%.

The low molecular weight alcohol is an alcohol having from 1 to 3 carbon atoms, in order to lower the freezing point of the water and to lower the viscosity of the ink. Preferably, the alcohol is one of methanol, ethanol and iso-propanol. Most preferably, the alcohol consists essentially of methanol.

The glycol may comprise any of the lower molecular weight glycols, such as ethylene glycol, diethylene glycol, triethylene glycol, tetraethylene glycol and propylene glycol. The selection is limited only by the need to employ a glycol that does not increase the viscosity of the ink over that value described in greater detail below.

Preferably, the glycol is one of ethylene glycol, diethylene glycol and triethylene glycol. Most preferably, the glycol consists essentially of diethylene glycol.

The concentration of the glycol is less than about 15 wt% (less than about 10 wt% for triethylene glycol), since a greater amount results in an ink having a viscosity too high to print adequately at the low service temperatures contemplated.

The dye may comprise any of the dyes commonly employed in ink-jet printers, such as dyes having sulfonate groups. An example of such a dye is Food Black 2. Other examples of suitable dyes include Mobay Special Direct Black Liquid (SP) and infrared inks used in bar code readable applications.

The dye is present in a range of about 3 to 5 wt%. Less than about 3% results in poor print quality, while greater than about 5% results in precipitation of the dye at the low temperatures contemplated herein.

The viscosity of the ink is preferably maintained below about 20 cp at the temperature of use. A higher viscosity results in plugging of the print head orifices and eventual ceasing of printing.

The surface tension of the ink is preferably maintained above about 30 dyne/cm at -30°C. Reduction in surface tension results in loss of capillary action feed in the print head and also causes spreading out of the ink along the fibers of the paper substrate, resulting in poor print quality.

Such viscosity and surface tension limitations are met by employing a vehicle and dye having a concentration within the ranges given above.

Advantageously, crusting of the print head orifices (a problem with present commercial inks) is not a problem with the ink compositions of the invention. Also, kogation (a coined term unique to thermal ink-jet printing, which describes the decomposition of the dye in the ink resulting from heating the ink to a high temperature by the hot resistors used to "fire" droplets of ink toward the paper substrate) is not a problem with the ink compositions of the invention.

While it is only required that the ink compositions of the invention provide an acceptable print quality up to about 23°C, it fortuitously happens that these ink compositions are useful up to about 40°C. However, beyond that temperature, the surface tension is too low, and the observed print quality is considered to be unacceptable for most applications.

Use of a black dye, such as Food Black 2, in the vehicle disclosed above and in the concentration range disclosed above provides an ink that remains bar code readable (in the visible spectral region).

## INDUSTRIAL APPLICABILITY

The ink composition of the invention is suitably employed in ink-jet printers, particularly thermal ink-jet printers, for use in low temperature environments.

EXAMPLES

Example 1.

A low temperature ink was formulated, consisting essentially of 40 wt% methanol in aqueous solution and 4 wt% dye (Food Black 2). The pH of the ink was 3.55, the viscosity of the ink was 16.68 cp at -30°C and 1.87 cp at 23°C, the surface tension was 37.8 dynes/cm at 23°C, and the conductivity was 3.06 mmho. The ink produced acceptable print quality from -30°C to 23°C, although optimum print quality was observed at temperatures less than 0°C.

Example 2.

A low temperature ink was formulated, consisting essentially of 40 wt% methanol and 5 wt% diethylene glycol in aqueous solution and 4 wt% dye (FB2). The pH of the ink was 3.49, the viscosity of the ink was 15.82 cp at -30°C and 2.01 cp at 23°C, the surface tension was 37.3 dynes/cm at 23°C, and the conductivity was 2.81 mmho. The ink produced acceptable print quality from -30°C to 23°C, and the print quality at room temperature was somewhat better than that of the ink composition of Example 1.

Examples 3-5.

Low temperature inks comprising the following compositions are prepared:

| Ex. | Composition |
| --- | --- |
| 3 | 40 wt% methanol |
| | 10 wt% diethylene glycol |
| | 4 wt% dye |
| | balance water |
| 4 | 30 wt% methanol |
| | 5 wt% diethylene glycol |
| | 4 wt% dye |
| | balance water |
| 5 | 30 wt% methanol |
| | 10 wt% diethylene glycol |
| | 4 wt% dye |
| | balance water |

The print quality of the three inks is acceptable over the temperature range of -30°C to 23°C. However, inks containing methanol in lower concentration (between about 30 to 40 wt%) and diethylene glycol in greater concentration (between about 5 to 10 wt%) provide improved print quality at room temperature.

Thus, an improved ink composition for printing at temperatures as low as about -30°C has been disclosed. Various changes and modifications may be made by those skilled in the art without departing from the spirit and scope of the invention, and all such changes and modifica tions are considered to be within the scope of the appended claims.

## Claims

1. An ink composition suitable for printing at temperatures at least as low as about -30°C comprising: at least one component selected from a low molecular weight alcohol, present in an amount up to about 50 wt%, and a glycol, ranging from 0 to about 15 wt%, dye, ranging from about 3 to 5 wt%; and the balance water, the viscosity of said ink composition being maintained below about 20 cp at -30°.

2. An ink composition according to Claim 1 wherein said low molecular weight alcohol consists essentially of an alcohol selected from methanol, ethanol and iso-propanol.

3. An ink composition according to Claim 2 wherein said low molecular weight alcohol consists essentially of methanol.

4. An ink composition according to any of Claims 1 to 3 wherein said low molecular weight alcohol ranges in concentration from about 30 to 50 wt%.

5. An ink composition according to any of Claims 1 to 4 wherein said glycol consists essentially of a glycol selected from ethylene glycol, diethylene glycol, triethylene glycol, tetraethylene glycol and propylene glycol.

6. An ink composition according to Claim 5 wherein said glycol consists essentially of a glycol selected from ethylene glycol, diethylene glycol and triethylene glycol.

7. An ink composition according to Claim 6 wherein said glycol consists essentially of diethylene glycol.

8. An ink composition according to Claim 6 wherein said glycol consists essentially of triethylene glycol, ranging from 0 to about 10 wt%.

9. An ink composition according to Claim 1 consisting essentially of about 40 wt% methanol in aqueous solution and about 4 wt% dye.

10. The ink composition according to Claim 1 consisting essentially of about 40 wt% methanol and about 5 wt% diethylene glycol in aqueous solution and about 4 wt% dye.

11. The ink composition according to Claim 1 consisting essentially of about 40 wt% methanol and about 10 wt% diethylene glycol in aqueous solution and about 4 wt% dye.

12. The ink composition according to Claim 1 consisting essentially of about 30 wt% methanol and about 5 wt% diethylene glycol in aqueous solution and about 4 wt% dye.

13. The ink composition according to Claim 1 consisting essentially of about 30 wt% methanol and about 10 wt% diethlene glycol in aqueous solution and about 4 wt% dye.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 908 091 (CANON) * Claims 1,5; page 18, lines 16-19; page 19, lines 8-12; page 50, example 5 * | 1-4 | C 09 D 11/00 |
| X | EP-A-0 121 993 (CANON) * Abstract; page 8, lines 14-20; page 9, lines 10-14; page 9, line 24 * | 1-4 | |
| A | CHEMICAL ABSTRACTS, vol. 90, no. 18, April 1979, page 75, abstract no. 139209b, Columbus, Ohio, US; & JP-A-79 12 909 (TOYO INK. MFG. CO., LTD) 31-01-1979 | 1-3 | |

TECHNICAL FIELDS
SEARCHED (Int. Cl.4)

C 09 D 11/00

The present search report has been drawn up for all claims

| Place of search | Date of completion of the search | Examiner |
|---|---|---|
| THE HAGUE | 07-12-1987 | GIRARD Y.A. |